# EUROPEAN PATENT SPECIFICATION

(11) **EP 1 214 564 B1**
(45) Date of publication and mention of the grant of the patent: **10.10.2007**
(21) Application number: 00962655.7
(22) Date of filing: 11.09.2000
(51) Int. Cl.: G01F 1/66, G01P 5/00, G01D 3/036

(54) **REDUCTION OF SYSTEMATIC NOISE IN ELECTRONIC SYSTEMS**
VERRINGERUNG DES SYSTEMATISCHEN RAUSCHENS IN ELEKTRONISCHE SYSTEME
REDUCTION DU BRUIT SYSTEMATIQUE DANS DES SYSTEMES ELECTRONIQUES

(30) Priority: 22.09.1999 GB 9922293; 01.03.2000 GB 0004792
(43) Date of publication of application: 19.06.2002
(73) Proprietor: Landis+Gyr Limited, Telford Shropshire TF1 7YG (GB)
(72) Inventor: MATTHEWS, Michael, Rochdale, Lancashire (GB); HULME, Alan, Charles, Wilmslow, Cheshire SK9 6EP (GB)
(74) Representative: Humphrey-Evans, Edward John
(86) International application number: PCT/GB2000/003518
(87) International publication number: WO 2001/022040

(56) References cited:
- EP-A- 0 713 080
- GB-A- 2 080 530
- US-A- 5 956 290

## Description

The present invention relates to an apparatus and method for reduction of systematic noise in electronic systems.

In particular, the invention relates to electronic systems that include analogue components, which are especially sensitive to noise. Analogue components are used in circuitry for measuring and monitoring parameters including temperature, time and gas flow. For accurate measurements, it is thus desirable that interference from noise sources be minimised.

Noise can either be random or systematic (non-random) in nature. Random noise is mainly due to thermal effects of resistive elements of electronic circuits. Other types of random noise include shot noise and 1/f noise (or 'pink noise'). Random noise can be minimised by careful selection of components and analogue circuit design, for example by careful power supply routing and decoupling or by employing a single point ground. In addition, the effects of random noise can be averaged out by taking several measurements of the parameter of interest.

Interference from defined events such as the switching of digital circuits causes systematic noise effects. In many circuits the main source of such defined events is the system clock. If a noisy digital signal or system clock initiates measurements of the parameter of interest, systematic noise effects cannot be averaged out by taking several measurements.

Circuits containing both analogue and digital components are known as mixed signal circuits. Many electronic applications, particularly applications involving microcontrollers, use mixed signal circuits, for example mixed signal application specific integrated circuits (ASICs). Systems that employ mixed signal circuits are particularly sensitive to systematic interference.

In mixed signal ASICs, signals in the digital components cause interference currents to flow within the ASIC substrate which in turn couple into the sensitive analogue components used to process the signal of interest.

Mixed signal ASICs are used in flow metering. The time of flight (TOF) of a signal, for example an ultrasonic signal, is measured using a system clock - a digital component. If the received signal is subjected to noise, then both the TOF measurement and meter accuracy are affected. This is particularly true for ultrasonic gas meter applications where the signal of interest is severely attenuated by the gas within the measuring tube, resulting in a poor signal to noise ratio. As elsewhere, the influence of random noise can be cancelled out over time by sampling the gas flow on a regular basis and averaging. However systematic noise, for example noise caused by the system clock pulse-edges, will not average out, and the interference can only be reduced by taking special steps.

The analogue and digital components of a mixed signal ASIC cannot be separated. External circuit changes can improve system performance in the presence of systematic interference but not in every case. When improved system performance cannot be achieved by external circuit changes, expensive and time-consuming re-engineering of the ASIC has to be considered. Due to the complexity of mixed signal ASICs, there is no guarantee that re-engineering the ASIC can cure the problem of systematic interference. The signal to noise ratio in the re-engineered ASIC may still be too low for measurements to be meaningful.

GB 2 080 530 A relates to a system measuring time of flight of measuring pulses in which transmission of signals is delayed to reduce the possibility of coincidence with reception of measuring signals. In this system the frequency of transmission is variable.

EP 0 713 080 A1 discloses a method and device for measuring a fluid velocity wherein two transceivers are in turn emitter and receiver so as to avoid the emission of a pulse during the reception of a precedent pulse.

US 5,956,290 A1 discloses a delay locked loop which comprises a variable delay which receives a reference clock and outputs a second clock after an elapse time of a controlled delay.

Ideally, apparatus that reduces systematic noise in mixed signal metering circuitry will be provided, thereby rendering ASIC design less critical and increasing the chance of successfully curing the systematic noise.

It is therefore an object of the invention, when applied to a metering apparatus, to shift the signal of interest in relation to a fixed clock, in order to reduce systematic interference from the fixed clock by taking several measurements and averaging the result.

It is a further object of the invention to shift the signal of interest in relation to the fixed clock in order to reduce systematic interference from the fixed clock by predicting the coincidence of a given signal of interest and systematic noise.
According to the present invention there is provided an electronic metering apparatus which is operable to measure the duration of transmission of measurement signals between first and second transducers; the apparatus comprising: a first clock, which operates at a substantially constant frequency; and a second clock, which operates at a higher frequency than the first clock; wherein the apparatus is operable to transmit measurement signals coincident with a first clock pulse edge; characterized in that the measurement apparatus includes a delay means operable to delay signal transmission between successive transmissions, the delay periods being determined with respect to the second clock frequency whereby to reduce the effect of coincidence of reception of a signal with a subsequent first clock pulse edge.

Preferably, the measurement apparatus includes a first transducer, which transmits a first measurement signal, the signal transmission coinciding with a given edge of a pulse of the first clock; and a second transducer, which receives the first measurement signal. The second transducer can transmit a second measurement signal and the first transducer can in turn receive the second measurement signal.

Advantageously, a plurality of further first measurement signals and further second measurement signals are transmitted between the first and second transducers.

It is preferred that the first transducer and the second transducer are both ultrasonic transducers and that the time of flight measured is the time of flight of a given measurement signal through a medium from one transducer to the other. The medium is preferably a gas.

The delay means advantageously delays successive transmissions of the at least one measurement signal in a predetermined sequence of delays to avoid the at least one measurement signal being received at substantially the same time as any first clock pulse edge.

A preferred sequence of delays starts at a minimum number of second clock periods, the number of second clock periods by which the transmission is delayed is then incremented by a first integer number of second clock periods for each further measurement until the delay reaches a maximum number of second clock periods, thereafter the delay in subsequent time of flight measurements is decremented by a second integer number of second clock periods for each further measurement until the delay reaches the minimum number of second clock periods.

Preferably, the first integer number is one and the second integer number is also one. The minimum number of second clock periods is advantageously zero. Preferred maximum numbers of second clock periods include seven and sixteen.

The delay means can advantageously prevent a given measurement signal from being transmitted whenever the given measurement signal would be received at the same time as any first clock pulse edge.

Preferably, the delay means prevents transmission of the given measurement signal by imposing a delay of a predetermined number of second clock periods on the transmission of the given measurement signal.

The electronic metering apparatus advantageously further includes a microcontroller which controls the delay means, the microcontroller calculates when a received signal will coincide with a first clock edge and as a consequence delays the transmission by a number of second clock periods, the delay preventing the coincidence of the measurement signal with said first clock edge.
In a further aspect of the invention, there is provided a method of operating an electronic metering comprising a measurement apparatus which is operable to measure the duration of measurement signals between first and second transducers, which includes a first clock, which operates at a substantially constant frequency; and a second clock, which operates at a higher frequency than the first clock; wherein the apparatus is operable to transmit measurement signals coincident with a first clock pulse edge, having a delay means operable to delay signal transmission between successive transmissions, the delay periods being determined with respect to the second clock frequency, the method having the steps of: transmitting measurement signals with a predetermined delay; and receiving the measurement signals; the predetermined delay being operable to delay the reception of the at least one measurement signal to a time other than the time when any first clock pulse edge is present.

Advantageously, the predetermined delay consists of a delay of a predetermined number of second clock periods.

Preferably, the predetermined number of second clock periods starts at a minimum number of second clock periods, the number of second clock periods by which the transmission is delayed is then incremented by a first integer number of second clock periods for each further measurement until the delay reaches a maximum number of second clock periods, thereafter the delay in subsequent time of flight measurements is decremented by an integer number of second clock periods for each further measurement until the delay reaches the minimum number of second clock periods.

Preferably, the first integer number is one and the second integer number is also one. The minimum number of second clock periods is advantageously zero. Preferred maximum numbers of second clock periods include seven and sixteen.

The predetermined delay advantageously prevents a given measurement signal from being transmitted whenever the given measurement signal would be received at the same time as any first clock pulse edge.

Preferably, the predetermined delay prevents transmission of the given measurement signal by imposing a delay of a predetermined number of second clock periods on the transmission of the given measurement signal. More preferably, the predetermined delay is determined by calculating occasions when a received signal will coincide with a first clock edge and using the calculation to determine the delay by which the transmission is delayed in order to prevent the coincidence of the measurement signal with any first clock edge.

Advantageously, the electronic metering apparatus is provided in a gas meter.

For a better understanding of the present invention, reference will now be made, by way of example only, to the accompanying drawings:
Figure 1, shows a ultrasonic gas metering system to which the present invention applies;
Figure 2, shows the coincidence of signal pulse and sub-clock signal edge which the present invention seeks to avoid; and
Figure 3, is a diagram illustrating one method of delaying the transmission of a signal as used in the present invention.

The application of the present invention to ultrasonic gas metering systems can be seen in the following embodiment.

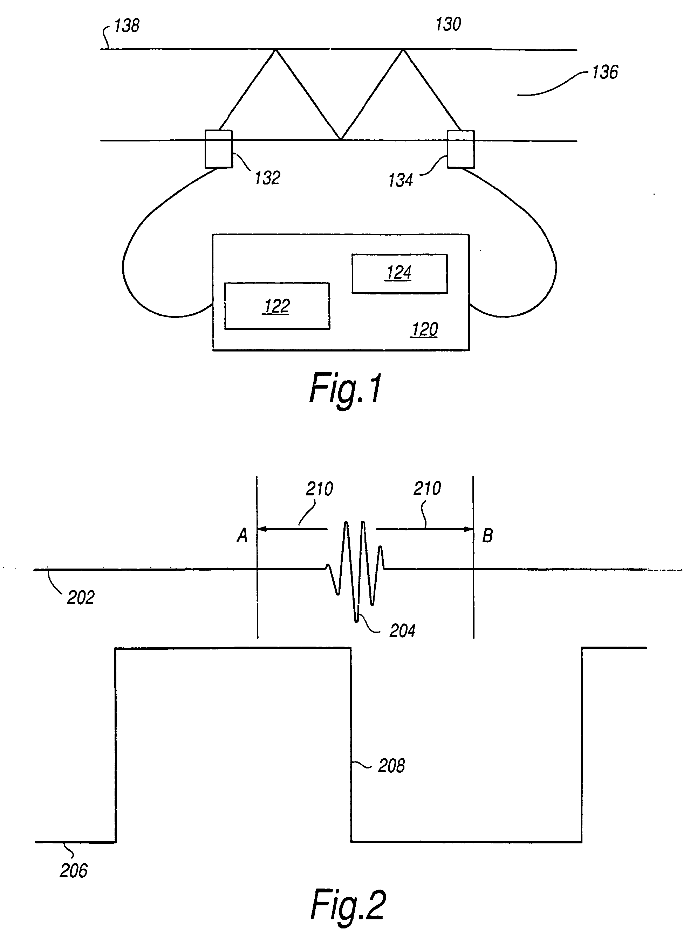

Figure 1 shows an ultrasonic gas metering system to which the invention applies. Within an ultrasonic gas flow meter 120 there is a measuring tube 138 with an ultrasonic transducer at each end 132, 134. The transducers 132, 134 alternate between transmitting and receiving. To measure flow in a medium 136, a first transducer 132 transmits a signal which is received by a second transducer 134, and the time of flight (TOF) is determined using the system clock 124. Thereafter the second transducer 134 transmits a signal which is received by the first transducer 132. The transmission pattern is repeated continually. Over time the effects of random noise on the TOF measurements will average out. If the path length and cross sectional area of the measuring tube are accurately known, the flow can be calculated from the TOF measurements.

In order to measure TOF accurately a 32,768Hz (32kHz) watch crystal is used to generate a stable clock (or 'sub-clock') 122. However to get the required time resolution this sub-clock signal has to be multiplied up to 2.097MHz (the 'main clock' frequency) using a phase locked loop 124.

A conventional meter produces a signal "FIRE" which initiates the relevant transducer to transmit a signal. The FIRE signal is transmitted coincident with a 32kHz sub-clock edge. If the received signal also happens to be coincident with another 32kHz sub-clock edge, then systematic interference can occur. This type of systematic interference has proved to be a problem for gas meters that use mixed signal ASICs.

Figure 2 shows two waveforms which illustrate this problem and the inventive solution. The top waveform 202 is the signal from the transducers and the bottom waveform 206 is the noisy sub-clock signal. When a sub-clock edge 208 occurs at the same time as a signal pulse 204, as illustrated, interference may corrupt the signal.

Now consider the situation when the sub-clock 206 is steady; if the transmission signal (the FIRE signal) is shifted causing the signal pulse 204 to be shifted in the direction of the arrows 210, between "A" and "B", then the influence of the sub-clock edge 208 will be lessened.

Thus in the gas metering embodiment of the invention, the FIRE signal is shifted in time with respect to the sub-clock, which in turn allows the received signal to be shifted away from systematic noise. A convenient reference for the amount of shift can be one or more multiples of the main clock period. So, for example, the FIRE signal could be delayed until one main clock period after a sub-clock edge.

Variable delay will be of little use if the delayed FIRE signal still causes the received signal to be shifted to coincide with a noisy clock edge. To get round this difficulty, one of two alternative methods can be adopted.

In the first method, the FIRE signal can be shifted in a rotating fashion. By making the amount of shift variable (either random or incremental between successive measurements) the received signal cannot be coincident with systematic noise for every measurement made. So the effect is to reduce the influence of the noise. The more variation in the shift the less the influence should be.

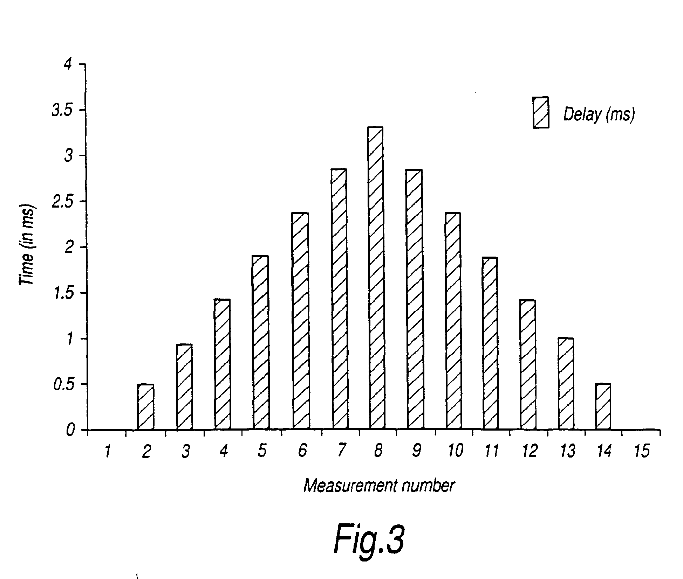

By way of illustration consider the example of a rotating shift of seven periods shown in Figure 3. Here the amount of shift increments up to seven then decrements to zero. Then the whole process repeats.

Of course, this is only one example from amongst many appropriate shift patterns. By allowing the signal to move, in a number of steps, and then back again, and making a measurement at each step, the effects of the sub-clock edges can be reduced by averaging. It will be understood that the maximum and minimum shifts, the magnitude of the increments and even the pattern of applications of increments are all predetermined so that there is a range of delays over a cycle of rotation. The minimum delay imposed on the measurement signal is not necessarily zero, nor is the maximum delay limited to seven (another common value is sixteen periods). The increments need not be in single clock periods; increments can equally well be two or three clock periods. The increments do not need to be made at each successive measurement: for example three successive measurements can be made at a given delay before incrementing.

For each measurement, the transmission of the signal is delayed by an integer multiple of the main (2.097MHz) clock period (i.e. 477 ns). This delay is varied over many measurements and the effects of systematic interference are averaged out to an acceptable level. The delay is incremented up to a maximum number of main clock periods, and is then decremented back to zero, thereafter the process repeats.

With this rotating shift method, the gas flow meter does not have to know where clock edges are. Under steady state conditions for temperature and flow, the received signal will be moving in relation to the sub-clock edges; the systematic interference of the sub-clock will be reduced over several measurements. The shift steps and shift range may be changed to reduce the systematic effects to an acceptable level.

The second method requires knowledge of where clock edges are and consequently prevents the received signal from coinciding with clock edges.

Metering systems generally have microcontrollers for a variety of control purposes. Systems with microcontrollers can be programmed to use the main clock for the FIRE signal delay and to measure TOF, such systems can calculate when a received signal is likely to coincide with systematic noise, such as sub-clock edges, and thus modify the signal delay accordingly. A TOF estimate can be generated from recent TOF measurements. If this estimated time proves to be sufficiently close to a multiple of the half period of the sub-clock (when a clock edge occurs) an evasive transmission delay is imposed. Referring again to Figure 2, by effectively moving the signal to positions "A" or "B", coincidence with a sub-clock edge 208 can be avoided. It is thus possible to avoid systematic interference in a single measurement, provided systematic noise is confined to one signal source (sub-clock signal or a harmonic of the main clock signal).

In this way systematic interference in mixed signal ASICs can be overcome or at least reduced.

If the transmission delay is under the control of a microcontroller, the delay is thereby known and can be compensated for in the TOF measurement, whether the rotating shift or the clock edge avoidance method is applied.

It will be understood that although the preceding discussion relates to mixed signal application specific integrated circuits, the invention applies equally well to other types of mixed signal circuitry that share the problems of systematic noise.

Although the above discussion deals with ultrasonic gas metering applications it is not intended that the scope of the discussion is limited solely to applications to gas metering. The methods described can equally be applied to the metering of the flow of fluids in general, whether gaseous or liquid. In a similar vein, the transducers are not to be considered restricted in number to just two transducers or in type to ultrasonic transducers alone. The present invention is relevant to measurement using any conventional transducers, whether they be electromagnetic (e.g. RF, infrared, optical) or ultrasonic in nature. Indeed different types of transducers will be selected to measure flow under different temperature ranges and flow conditions.

## Claims

1. An electronic metering apparatus which is operable to measure the duration of transmission of measurement signals between first and second transducers (132, 134); the apparatus comprising:
a first clock (124), which operates at a substantially constant frequency; and a second clock (122), which operates at a higher frequency than the first clock;
wherein the apparatus is operable to transmit measurement signals coincident with a first clock pulse edge;
**characterized in that** the measurement apparatus includes a delay means operable to delay signal transmission between successive transmissions, the delay periods being determined with respect to the second clock frequency whereby to reduce the effect of coincidence of reception of a signal with a subsequent first clock pulse edge.

2. An electronic metering apparatus according to Claim 1, wherein the first transducer transmits a first measurement signal, the signal transmission coinciding with a given edge of a pulse of the first clock; and a second transducer, which receives the first measurement signal.

3. An electronic metering apparatus according to Claim 2, wherein the second transducer transmits a second measurement signal and the first transducer receives the second measurement signal.

4. An electronic metering apparatus according to Claim 3, wherein further first measurement signals and further second measurement signals are transmitted between the first and second transducers.

5. An electronic metering apparatus according to Claims 2, 3 or 4, where the first transducer and the second transducer are both ultrasonic transducers and the time duration measured is the time taken for a given measurement signal to pass through a medium from one transducer to the other.

6. An electronic metering apparatus according to Claim 5, where the medium is a gas.

7. An electronic metering apparatus according to any one of the preceding claims, wherein the delay means delays successive transmissions of the at least one measurement signal in a predetermined sequence of delays to avoid the at least one measurement signal being received at substantially the same time as any first clock pulse edge.

8. An electronic metering apparatus according to Claim 7, wherein the sequence of delays starts at a minimum number of second clock periods, the number of second clock periods by which the transmission is delayed is then incremented by a first integer number of second clock periods for each further measurement until the delay reaches a maximum number of second clock periods, thereafter the delay in subsequent time of flight measurements is decremented by a second integer number of second clock periods for each further measurement until the delay reaches the minimum number of second clock periods.

9. An electronic metering apparatus according to Claim 8, wherein the first integer number is one and the second integer number is also one.

10. An electronic metering apparatus according to Claim 8, where the minimum number of second clock periods is zero.

11. An electronic metering apparatus according to Claim 8 or 9, where the maximum number of second clock periods is seven.

12. An electronic metering apparatus according to Claim 8 or 9, where the maximum number of second clock periods is sixteen.

13. An electronic metering apparatus according to any one of Claims 1 to 6, wherein the delay means is operable to calculate when coincidence of reception of a signal with a first clock edge is likely to occur and provides a further evasive delay to prevent a given measurement signal from being transmitted whenever the given measurement signal would be received at the same time as any first clock pulse edge.

14. An electronic metering apparatus according to Claim 13, wherein the delay means prevents transmission of the given measurement signal by imposing a delay of a predetermined number of second clock periods on the transmission of the given measurement signal.

15. An electronic metering apparatus according to any one of the preceding claims, further including a microcontroller which controls the delay means, the microcontroller calculates when a received signal will coincide with a first clock edge and as a consequence delays the transmission by a number of second clock periods, the delay preventing the coincidence of the measurement signal with said first clock edge.

16. A method of operating an electronic meter comprising a measurement apparatus which is operable to measure the duration of measurement signals between first and second transducers (132, 134), which includes a first clock (124), which operates at a substantially constant frequency; and a second clock (122), which operates at a higher frequency than the first clock; wherein the apparatus is operable to transmit measurement signals coincident with a first clock pulse edge, having a delay means operable to delay signal transmission between successive transmissions, the delay periods being determined with respect to the second clock frequency, the method having the steps of:
transmitting measurement signals with a predetermined delay; and
receiving the measurement signals; the predetermined delay being operable to delay the reception of the at least one measurement signal to a time other than the time when any first clock pulse edge is present.

17. A method of delaying the transmission of at least one measurement signal according to Claim 16, wherein the predetermined delay consists of a delay of a predetermined number of second clock periods.

18. A method of delaying the transmission of at least one measurement signal according to Claim 17, wherein the predetermined number of second clock periods starts at a minimum number of second clock periods, the number of second clock periods by which the transmission is delayed is then incremented by a first integer number of second clock periods for each further measurement until the delay reaches a maximum number of second clock periods, thereafter the delay in subsequent time of flight measurements is decremented by an integer number of second clock periods for each further measurement until the delay reaches the minimum number of second clock periods.

19. A method of delaying the transmission of at least one measurement signal according to Claim 18, where the minimum number of second clock periods is zero.

20. A method of delaying the transmission of at least one measurement signal according to Claims 18 or 19, where the maximum number of second clock periods is seven.

21. A method of delaying the transmission of at least one measurement signal according to Claims 18 or 19, where the maximum number of second clock periods is sixteen.

22. A method of delaying the transmission of at least one measurement signal according to any one of Claims 18 to 21, wherein the first integer number is one and the second integer number is also one.

23. A method of delaying the transmission of at least one measurement signal according to any one of Claims 16 to 21, wherein the predetermined delay prevents a given measurement signal from being transmitted whenever the given measurement signal would be received at the same time as any first clock pulse edge.

24. A method of delaying the transmission of at least one measurement signal according to Claim 23, wherein the predetermined delay prevents transmission of the given measurement signal by imposing a delay of a predetermined number of second clock periods on the transmission of the given measurement signal.

25. A method of delaying the transmission of at least one measurement signal according to Claim 24, wherein the predetermined delay is determined by calculating occasions when a received signal will coincide with a first clock edge and using the calculation to determine the delay by which the transmission is delayed in order to prevent the coincidence of the measurement signal with any first clock edge.

26. A gas flow meter including an electronic metering apparatus as claimed in any one of claims 1 - 15.

27. A liquid flow meter including an electronic metering apparatus as claimed in any one of claims 1 - 5 & 7 - 15.

## Patentansprüche

1. Elektronisches Messgerät, das zum Messen der Dauer einer Übertragung von Messsignalen zwischen einem ersten und zweiten Transducer (132, 134) fähig ist,
wobei das Gerät Folgendes umfasst:
einen ersten Takt (124), der mit einer im Wesentlichen konstanten Frequenz betrieben wird, und einen zweiten Takt (122), der mit einer höheren Frequenz als der erste Takt betrieben wird,
wobei das Gerät zum Übertragen von Messsignalen, übereinstimmend mit einer ersten Taktimpulsflanke, fähig ist;
**dadurch gekennzeichnet, dass** das Messgerät ein Verzögerungsmittel beinhaltet, das zur Verzögerung einer Signalübertragung zwischen aufeinanderfolgenden Übertragungen fähig ist, wobei die Verzögerungszeiten bezüglich der zweiten Taktfrequenz bestimmt werden, um den Zufallseffekt des Empfangs eines Signals mit einer anschließenden ersten Taktimpulsflanke zu reduzieren.

2. Elektronisches Messgerät nach Anspruch 1, wobei der erste Transducer ein erstes Messsignal überträgt und wobei die Signalübertragung mit einer bestimmten Flanke eines Impulses des ersten Taktes zusammentrifft; und der zweite Transducer erhält das erste Messsignal.

3. Elektronisches Messgerät nach Anspruch 2, wobei der zweite Transducer ein zweites Messsignal überträgt und der erste Transducer das zweite Messsignal erhält.

4. Elektronisches Messgerät nach Anspruch 3, wobei weitere erste Messsignale und weitere zweite Messsignale zwischen dem ersten und zweiten Transducer übertragen werden.

5. Elektronisches Messgerät nach Anspruch 2, 3 oder 4, wobei der erste Transducer und der zweite Transducer Ultraschalltransducer sind, und die zeitliche Dauer, die gemessen wird, die Zeit ist, die ein bestimmtes Messsignal braucht, um durch ein Medium von einem Transducer zum anderen zu gelangen.

6. Elektronisches Messgerät nach Anspruch 5, wobei das Medium ein Gas ist.

7. Elektronisches Messgerät nach einem der vorherigen Ansprüche, wobei das Verzögerungsmittel aufeinanderfolgende Übertragungen des mindestens einen Messsignals in einer vorbestimmten Sequenz von Verzögerungen verzögert, um zu verhindern, dass das mindestens eine Messsignal im Wesentlichen zur selben Zeit wie eine erste Taktimpulsflanke empfangen wird.

8. Elektronisches Messgerät nach Anspruch 7, wobei die Sequenz der Verzögerungen mit einer Mindestanzahl von zweiten Taktperioden beginnt, wobei die Anzahl der zweiten Taktperioden, um die die Übertragung verzögert wird, anschließend um eine erste Ganzzahl der zweiten Taktperioden für jede weitere Messung inkrementiert wird, bis die Verzögerung eine Höchstanzahl von zweiten Taktperioden erreicht, woraufhin die Verzögerung der darauffolgenden Flugzeitmessungen um eine zweite Ganzzahl der zweiten Taktperioden für jede weitere Messung dekrementiert wird, bis die Verzögerung die Mindestanzahl von zweiten Taktperioden erreicht.

9. Elektronisches Messgerät nach Anspruch 8, wobei die erste Ganzzahl eine Eins und die zweite Ganzzahl ebenfalls eine Eins ist.

10. Elektronisches Messgerät nach Anspruch 8, wobei die Mindestanzahl von zweiten Taktperioden null ist.

11. Elektronisches Messgerät nach Anspruch 8 oder 9, wobei die Höchstanzahl der zweiten Taktperioden sieben ist.

12. Elektronisches Messgerät nach Anspruch 8 oder 9, wobei die Höchstanzahl der zweiten Taktperioden sechzehn ist.

13. Elektronisches Messgerät nach einem der Ansprüche 1 bis 6, wobei das Verzögerungsmittel dazu fähig ist, zu berechnen, wann das Zusammentreffen eines Signalempfangs mit einer ersten Taktimpulsflanke wahrscheinlich ist, und es bietet eine weitere ausweichende Verzögerung, um zu verhindern, dass ein bestimmtes Messsignal übertragen wird, und zwar immer dann, wenn das bestimmte Messsignal zur selben Zeit wie eine erste Taktimpulsflanke eingehen würde.

14. Elektronisches Messgerät nach Anspruch 13, wobei das Verzögerungsmittel eine Übertragung des bestimmten Messsignals verhindert, indem es eine Verzögerung einer vorbestimmten Anzahl von zweiten Taktperioden bei der Übertragung des bestimmten Messsignals erzwingt.

15. Elektronisches Messgerät nach einem der vorhergehenden Ansprüche, das außerdem einen Microcontroller beinhaltet, der das Verzögerungsmittel steuert, wobei der Microcontroller berechnet, wann ein eingegangenes Signal mit einer ersten Taktimpulsflanke zusammentreffen wird, und verzögert somit die Übertragung um eine Anzahl von zweiten Taktperioden, wobei die Verzögerung ein Zusammentreffen des Messsignals mit der besagten ersten Taktimpulsflanke verhindert.

16. Methode zum Betrieb eines elektronischen Instruments, das ein Messgerät umfasst, das zum Messen der Dauer von Messsignalen zwischen einem ersten und zweiten Transducer (132, 134) fähig ist, das einen ersten Takt (124) beinhaltet, der mit einer im Wesentlichen konstanten Frequenz erfolgt, und einen zweiten Takt (122), der mit einer höheren Frequenz als der erste Takt erfolgt, wobei das Gerät zur Übertragung von Messsignalen, die mit einer ersten Taktimpulsflanke zusammentreffen, fähig ist und ein Verzögerungsmittel vorhanden ist, das zur Verzögerung einer Signalübertragung zwischen aufeinanderfolgenden Übertragungen fähig ist, wobei die Verzögerungszeiten bezüglich der zweiten Taktfrequenz bestimmt werden. Diese Methode besteht aus folgenden Schritten:
Übertragung der Messsignale mit einer vorbestimmten Verzögerung, und Empfang der Messsignale, wobei die vorbestimmte Verzögerung dazu fähig ist, den Empfang des mindestens einen Messsignals zu einem anderen Zeitpunkt als dem Zeitpunkt, an dem die erste Taktimpulsflanke vorhanden ist, zu verzögern.

17. Methode zur Verzögerung der Übertragung von mindestens einem Messsignal nach Anspruch 16, wobei die vorbestimmte Verzögerung aus einer Verzögerung einer vorbestimmten Anzahl von zweiten Taktperioden besteht.

18. Methode zur Verzögerung der Übertragung von mindestens einem Messsignal nach Anspruch 17, wobei die vorbestimmte Anzahl von zweiten Taktperioden mit einer Mindestanzahl von zweiten Taktperioden beginnt, wobei die Anzahl der zweiten Taktperioden, um die die Übertragung verzögert wird, anschließend um eine erste Ganzzahl der zweiten Taktperioden für jede weitere Messung inkrementiert wird, bis die Verzögerung eine Höchstanzahl von zweiten Taktperioden erreicht, woraufhin die Verzögerung der darauffolgenden Flugzeitmessungen um eine Ganzzahl der zweiten Taktperioden für jede weitere Messung dekrementiert wird, bis die Verzögerung die Mindestanzahl von zweiten Taktperioden erreicht.

19. Methode zur Verzögerung der Übertragung von mindestens einem Messsignal nach Anspruch 18, wobei die Mindestanzahl von zweiten Taktperioden null ist.

20. Methode zur Verzögerung der Übertragung von mindestens einem Messsignal nach Anspruch 18 oder 19, wobei die Höchstanzahl von zweiten Taktperioden sieben ist.

21. Methode zur Verzögerung der Übertragung von mindestens einem Messsignal nach Anspruch 18 oder 19, wobei die Höchstanzahl von zweiten Taktperioden sechzehn ist.

22. Methode zur Verzögerung der Übertragung von mindestens einem Messsignal nach einem der Ansprüche 18 bis 21, wobei die erste Ganzzahl eins und die zweite Ganzzahl ebenfalls eins ist.

23. Methode zur Verzögerung der Übertragung von mindestens einem Messsignal nach einem der Ansprüche 16 bis 21, wobei die vorbestimmte Verzögerung verhindert, dass ein bestimmtes Messsignal übertragen wird, und zwar immer dann, wenn das bestimmte Messsignal zur selben Zeit wie eine erste Taktimpulsflanke eingehen würde.

24. Methode zur Verzögerung der Übertragung von mindestens einem Messsignal nach Anspruch 23, wobei die vorbestimmte Verzögerung eine Übertragung des bestimmten Messsignals durch Erzwingen einer Verzögerung von einer vorbestimmten Anzahl von zweiten Taktperioden bei der Übertragung des bestimmten Messsignals verhindert.

25. Methode zur Verzögerung der Übertragung von mindestens einem Messsignal nach Anspruch 24, wobei die vorbestimmte Verzögerung durch Berechnung von Gelegenheiten, bei denen ein empfangenes Signal mit einer ersten Taktimpulsflanke zusammentrifft, bestimmt wird, und unter Verwendung der Berechnung wird die Verzögerungszeit bestimmt, um die die Übertragung verzögert wird, um das Zusammentreffen des Messsignals mit einer ersten Taktimpulsflanke zu verhindern.

26. Gasdurchflussmesser, einschließlich eines elektronischen Messgerätes, wie in einem der Ansprüche 1-15 angegeben.

27. Flüssigkeitsdurchflussmesser, einschließlich eines elektronischen Messgerätes, wie in einem der Ansprüche 1-5 und 7-15 angegeben.

## Revendications

1. Un appareil de mesure électronique qui est opérable pour mesurer la durée de transmission de signaux de mesure entre un premier et un deuxième transducteur (132, 134) ; l'appareil comprenant :
une première horloge (124) qui opère à une fréquence sensiblement constante ; et une deuxième horloge (122) qui opère à une fréquence plus élevée que la première horloge ;
selon lequel l'appareil est opérable pour transmettre des signaux de mesure coïncidents avec un front d'impulsion de la première horloge ;
**caractérisé en ce que** l'appareil de mesure comprend un moyen de temporisation opérable pour retarder la transmission des signaux entre des transmissions successives, les périodes de temporisation étant déterminées relativement à la fréquence de la deuxième horloge dans le but de diminuer l'effet d'une coïncidence de la réception d'un signal avec un front d'impulsion postérieur de la première horloge.

2. Un appareil de mesure électronique selon la Revendication 1, où le premier transducteur transmet un premier signal de mesure, la transmission du signal étant coïncidente avec un front d'impulsion donné de la première horloge ; et un deuxième transducteur qui reçoit le premier signal de mesure.

3. Un appareil de mesure électronique selon la Revendication 2, où le deuxième transducteur transmet un deuxième signal de mesure et le premier transducteur reçoit le deuxième signal de mesure.

4. Un appareil de mesure électronique selon la Revendication 3, où des premiers signaux de mesure supplémentaires et des deuxièmes signaux de mesure supplémentaires sont transmis entre le premier et le deuxième transducteur.

5. Un appareil de mesure électronique selon les Revendications 2, 3 ou 4, où le premier transducteur et le deuxième transducteur sont tous deux des transducteurs ultrasoniques et la durée mesurée est le temps que met un signal de mesure donné pour passer d'un transducteur à l'autre à travers un milieu de propagation.

6. Un appareil de mesure électronique selon la Revendication 5, selon lequel le milieu de propagation est un gaz.

7. Un appareil de mesure électronique selon l'une quelconque des revendications précédentes, où le moyen de temporisation retarde des transmissions successives d'au moins un signal de mesure dans une séquence prédéterminée de temporisations de manière à éviter qu'au moins un signal de mesure ne soit reçu sensiblement en même temps qu'un quelconque front d'impulsion de la première horloge.

8. Un appareil de mesure électronique selon la Revendication 7, où la séquence de temporisations démarre à un nombre minimum de périodes de la deuxième horloge, le nombre de périodes de la deuxième horloge par lesquels la transmission est retardée est ensuite incrémenté par un premier entier relatif de périodes de la deuxième horloge pour chaque mesure supplémentaire jusqu'à ce que la temporisation atteigne un nombre maximum de périodes de la deuxième horloge, la temporisation des mesures du temps de vol postérieures étant ensuite décrémentée par un deuxième entier relatif de périodes de la deuxième horloge pour chaque mesure supplémentaire jusqu'à ce que la temporisation atteigne le nombre minimum de périodes de la deuxième horloge.

9. Un appareil de mesure électronique selon la Revendication 8, où le premier entier relatif est un et le deuxième entier relatif est également un.

10. Un appareil de mesure électronique selon la Revendication 8, où le nombre minimum de périodes de la deuxième horloge est zéro.

11. Un appareil de mesure électronique selon la Revendication 8 ou 9, où le nombre maximum de périodes de la deuxième horloge est sept.

12. Un appareil de mesure électronique selon la Revendication 8 ou 9, où le nombre maximum de périodes de la deuxième horloge est seize.

13. Un appareil de mesure électronique selon l'une quelconque des Revendications 1 à 6, où le moyen de temporisation est opérable en vue de calculer à quel moment une coïncidence de la réception d'un signal avec un front d'impulsion de la première horloge est susceptible de se produire et qui fournit un retard évasif supplémentaire pour empêcher la transmission d'un signal de mesure donné chaque fois que le signal de mesure donné serait reçu en même temps qu'un quelconque front d'impulsion de la première horloge.

14. Un appareil de mesure électronique selon la Revendication 13, où le moyen de temporisation empêche la transmission du signal de mesure donné en imposant une temporisation d'un nombre prédéterminé de périodes de la deuxième horloge sur la transmission du signal de mesure donné.

15. Un appareil de mesure électronique selon l'une quelconque des revendications précédentes, comprenant en outre un microcontrôleur qui contrôle le moyen de temporisation, ce microcontrôleur calcule à quel moment un signal reçu coïncidera avec un front de la première horloge et en conséquence, retarde la transmission d'un certain nombre de périodes de la deuxième horloge, la temporisation empêchant la coïncidence du signal de mesure avec ledit front de la première horloge.

16. Une méthode d'opération d'un appareil de mesure électronique comprenant un appareil de mesure qui est opérable pour mesurer la durée des signaux de mesure entre le premier et le deuxième transducteur (132, 134), qui comprend une première horloge (124) fonctionnant à une fréquence sensiblement constante ; et une deuxième horloge (122) fonctionnant à une fréquence plus élevée que la première horloge ; selon laquelle l'appareil est opérable pour transmettre des signaux de mesure coïncidents avec un front d'impulsion de la première horloge, possédant un moyen de temporisation opérable pour retarder la transmission des signaux entre des transmissions successives, les périodes de temporisation étant déterminées relativement à la fréquence de la deuxième horloge, la méthode comprenant les étapes de :
transmission des signaux de mesure avec une temporisation prédéterminée ; et de
réception des signaux de mesure ; la temporisation prédéterminée étant opérable pour retarder la réception d'au moins un signal de mesure jusqu'à un moment autre que le moment lors duquel un quelconque front d'impulsion de la première horloge est présent.

17. Une méthode de temporisation de la transmission d'au moins un signal de mesure selon la Revendication 16, où la temporisation prédéterminée consiste en une temporisation d'un nombre prédéterminé de périodes de la deuxième horloge.

18. Une méthode de temporisation de la transmission d'au moins un signal de mesure selon la Revendication 17, où le nombre prédéterminé de périodes de la deuxième horloge commence à un nombre minimum de périodes de la deuxième horloge, le nombre de périodes de la deuxième horloge par lequel la transmission est retardée étant ensuite incrémenté par un premier entier relatif de périodes de la deuxième horloge pour chaque mesure supplémentaire jusqu'à ce que la temporisation atteigne un nombre maximum de périodes de la deuxième horloge, la temporisation des mesures du temps de vol postérieures étant ensuite décrémentée par un entier relatif de périodes de la deuxième horloge pour chaque mesure supplémentaire jusqu'à ce que la temporisation atteigne le nombre minimum de périodes de la deuxième horloge.

19. Une méthode de temporisation de la transmission d'au moins un signal de mesure selon la Revendication 18, où le nombre minimum de périodes de la deuxième horloge est zéro.

20. Une méthode de temporisation de la transmission d'au moins un signal de mesure selon les Revendications 18 ou 19, où le nombre maximum de périodes de la deuxième horloge est sept.

21. Une méthode de temporisation de la transmission d'au moins un signal de mesure selon les Revendications 18 ou 19, où le nombre maximum de périodes de la deuxième horloge est seize.

22. Une méthode de temporisation de la transmission d'au moins un signal de mesure selon l'une quelconque des Revendications 18 à 21, où l'entier relatif est un et le deuxième entier relatif est également un.

23. Une méthode de temporisation de la transmission d'au moins un signal de mesure selon l'une quelconque des Revendications 16 à 21, où la temporisation prédéterminée empêche la transmission d'un signal de mesure donné lors de la réception du signal de mesure donné en même temps qu'un quelconque front d'impulsion de la première horloge.

24. Une méthode de transmission d'au moins un signal de mesure selon la Revendication 23, où la temporisation prédéterminée empêche la transmission du signal de mesure donné en imposant une temporisation d'un nombre prédéterminé de périodes de la deuxième horloge lors de la transmission du signal de mesure donné.

25. Une méthode de temporisation de la transmission d'au moins un signal de mesure selon la Revendication 24, où la temporisation prédéterminée est déterminée en calculant les occasions lors desquelles un signal reçu coïncidera avec un front de la première horloge et en utilisant le calcul pour déterminer la temporisation de la transmission afin d'empêcher la coïncidence du signal de mesure avec un quelconque front de la première horloge.

26. Un débitmètre pour gaz comprenant un appareil de mesure électronique selon l'une quelconque des revendications 1 à 15.

27. Un débitmètre pour liquides comprenant un appareil de mesure électronique selon l'une quelconque des revendications 1 à 5 et 7 à 15.
